# EUROPÄISCHE PATENTSCHRIFT

(11) **EP 3 101 327 B1**
(45) Veröffentlichungstag und Bekanntmachung des Hinweises auf die Patenterteilung: **19.01.2022**
(21) Anmeldenummer: 16169182.9
(22) Anmeldetag: 11.05.2016
(51) Int. Cl.: F16M 13/04, F16M 11/18, F16M 11/20, F16M 11/04

(54) **KAMERASTABILISIERUNGSVORRICHTUNG UND KAMERAHALTERUNGSVORRICHTUNG HIERFÜR**
CAMERA STABILIZATION DEVICE AND CAMERA SUPPORT DEVICE FOR SAME
DISPOSITIF DE STABILISATION DE CAMERA ET DISPOSITIF DE FIXATION DE CAMERA ASSOCIE

(30) Priorität: 12.05.2015 DE 102015107483
(43) Veröffentlichungstag der Anmeldung: 07.12.2016
(73) Patentinhaber: FoMa Systems GmbH, 91207 Lauf (DE); Arnold & Richter Cine Technik GmbH & Co. Betriebs KG, 80807 München (DE)
(72) Erfinder: Foltyn, Roman, 90607 Rückersdorf (DE); Schaller, Curt O., 81543 München (DE)
(74) Vertreter: Manitz Finsterwald Patent- und Rechtsanwaltspartnerschaft mbB

(56) Entgegenhaltungen:
- WO-A1-2015/022433
- WO-A2-2015/055850
- FR-A1- 2 793 870
- US-A- 5 963 749
- US-A1- 2013 236 167

## Beschreibung

Die Erfindung betrifft eine Kamerastabilisierungsvorrichtung, aufweisend einen über eine Koppelvorrichtung kardanisch aufhängbaren, länglichen Pendelarm, der auf einer ersten Seite der Koppelvorrichtung eine Kamerahalterungsvorrichtung aufweist. Daneben betrifft die Erfindung eine Kamerahalterungsvorrichtung für eine derartige Kamerastabilisierungsvorrichtung.

Derartige Kamerastabilisierungsvorrichtungen wurden im Stand der Technik bereits beschrieben und sind auch als Kamera-Balance-Vorrichtungen bekannt. Sie dienen zum Ausbalancieren von Video- und Filmkameras, die manuell und/oder automatisch in verschiedene Positionen im Raum verbracht werden sollen. Die Kamerastabilisierungsvorrichtung kann dabei körpermontiert sein, wobei der Körper nicht zwangsläufig einer Person zugeordnet sein muss, sondern auch eine automatisch bewegbare, insbesondere verfahrbare, Plattform oder dergleichen, beispielsweise ein Kran, sein kann.

Um die Kamerastabilisierungsvorrichtung mit dem Körper zu verbinden, weist sie eine Koppelvorrichtung auf, über die sie an dem Körper kardanisch aufgehängt werden kann. Soll die Kamerastabilisierungsvorrichtung beispielsweise von einer Person getragen werden, kann die Kamerastabilisierungsvorrichtung über die Koppelvorrichtung kardanisch an einem Tragearm aufgehängt werden, welcher wiederum an einem Kleidungsstück, beispielsweise einer Weste, befestigt ist, die die Person trägt.

Die kardanische Aufhängung und die spezielle Ausgestaltung der Kamerastabilisierungsvorrichtung sollen dafür sorgen, dass sich ungewollte Bewegungen des sie tragenden Körpers, insbesondere einer Person, beim Laufen, Rennen oder sonstigem Bewegen, nicht auf die Kamera übertragen, welche ihre Ausrichtung beibehalten soll, mithin entkoppelt werden soll. Bekannt sind derartige Kamerastabilisierungsvorrichtungen beispielsweise unter dem Markennamen "STEADICAM^{™}".

Das gesamte Kamerastabilisierungssystem, welches so gebildet wird, ist derart ausgestaltet, dass der Aufbau aus Kamera und Kamerastabilisierungsvorrichtung bezüglich des Körpers eine Pendelbewegung ausführen kann. Bezüglich der Koppelvorrichtung ist die Kamerastabilisierungsvorrichtung üblicherweise zumindest näherungsweise neutral ausbalanciert, das bedeutet, der Schwerpunkt befindet sich bei montierter Kamera zumindest nahe an der Koppelvorrichtung. Hierzu ist auf einer der ersten Seite des Pendelarms, an dem die Kamera befestigt ist, gegenüberliegenden zweiten Seite üblicherweise ein Gegengewicht vorgesehen, wobei die Kamera insbesondere an einem Ende des Pendelarms, das Gegengewicht üblicherweise am anderen Ende des Pendelarms vorgesehen wird. Entsprechend sind geringe Kräfte ausreichend, um den Pendelarm zu bewegen und die Kamera mithin zu positionieren.

Hinsichtlich Kameras sind übliche Bezeichnungen für Achsen, in denen die Kamera bewegt werden kann, bekannt. Das sogenannte Rollen bezeichnet Rotation um eine Rollachse, die parallel zur Linsenachse bzw. Bildachse der Kamera ist. Das Neigen ("Tilten") der Kamera beschreibt die Rotation um eine horizontale Tiltachse, die 90° gegenüber der Rollachse verdreht ist und auch als Neigeachse bezeichnet werden kann. Panning schließlich bezeichnet die Rotation um eine Panachse, die senkrecht zur Tiltachse (und bei nicht verkippter Kamera auch zur Rollachse) steht.

Dokument US 5 963 749 A offenbart eine Kamerastabilisierungsvorrichtung mit den Merkmalen des Oberbegriffs des Anspruchs 1. Es handelt sich hierbei um einen selbstausgleichenden invertierbaren Kamerastabilisierer. Die grundsätzliche Idee in diesem seither fast ausschließlich verwendeten System ist es, an einem Ende des Pendelarms als Kamerahalterungsvorrichtung einen Rollkäfig vorzusehen, an dem die Kamera befestigt ist. Durch Motoren und eine geeignete Elektronik wird die Kamera dann immer in der Rollachse zum Horizont ausgerichtet, unabhängig davon, wie die Kamera im Rollkäfig steht und unabhängig von dem seitlichen Winkel der gesamten Kamerastabilisierungsvorrichtung. Auf diese Weise wird es möglich, durch seitliches Verschwenken mittels des Pendelarms die Kamera von einer oberen Position in eine untere Position, also niedriger als das Gegengewicht, zu verbringen. Dies stellt jedoch bereits einen der Nachteile der bekannten Kamerastabilisierungsvorrichtung dar, denn eine gerade Bewegung nach vorne, also vom Anwender weg, um die Kamera von oben nach unten bzw. von unten nach oben zu verbringen, ist nicht möglich. Ein weiterer Nachteil der bekannten Kamerastabilisierungsvorrichtung ist es, dass die Kamera immer im 90°-Winkel zum Pendelarm der Kamerastabilisierungsvorrichtung steht. Es ist mithin nicht möglich, den Blickwinkel der Kamera nach oben bzw. nach unten zu ändern. Diese gravierende Limitierung engt die kreative Bildgestaltung massiv ein.

Bei der bekannten Kamerastabilisierungseinrichtung ist der Rollkäfig meist über einen Kreuztisch mit dem Pendelarm verbunden. Um die Kamerastabilisierungsvorrichtung auszubalancieren, wird das geladene Gewicht auf der einen Seite des Pendelarms, also der Rollkäfig mit der Kamera, verfahren. Dies führt allerdings dazu, dass sich der Schwerpunkt des Rollkäfigs vom eigentlichen Schwerpunkt der Kamerastabilisierungsvorrichtung wegbewegt, so dass das Gesamtsystem eine Unwucht erhält, die durch Länge und Gewicht kompensiert werden muss.

Bei der bekannten Kamerastabilisierungsvorrichtung ist es ferner schwierig, eventuelle Fehlstellungen der Kamera auszugleichen, nachdem die Kameraaufnahme im Rollkäfig nur beschränkte oder keine Verstellmöglichkeiten aufweist. Die bekannte Kamerastabilisierungsvorrichtung hat den weiteren Nachteil, dass sie äußerst schwer und durch die große Länge auch sehr massenträge ist, was eine schnelle, agile Anwendung verhindert.

Dokument WO 2015/022433 A1 offenbart eine weitere Kamerastabilisierungsvorrichtung. Aus den Dokumenten FR 2 793 870 A1 und US 2013/0236167 A1 sind Kamerastabilisierungsvorrichtungen mit frei drehbaren und verstellbaren Gegengewichten und Pendelkörpern bekannt.

Der Erfindung liegt daher die Aufgabe zugrunde, eine einen vergrößerten Anwendungsbereich und eine bessere Handhabung erlaubende Kamerastabilisierungsvorrichtung anzugeben.

Zur Lösung dieser Aufgabe ist eine Kamerastabilisierungsvorrichtung mit den Merkmalen des Anspruchs 1 vorgesehen.

Bei dieser Kamerastabilisierungsvorrichtung ist vorgesehen, dass die Kamerahalterungsvorrichtung aufweist:
- einen äußeren Halterahmen, der an dem Pendelarm befestigt ist,
- ein erstes, in dem Halterahmen gelagertes, um eine Tiltachse drehbares Ringelement,
- ein innerhalb des ersten Ringelementes um eine zu der Tiltachse senkrechte Rollachse drehbar, insbesondere konzentrisch zu dem ersten Ringelement, gelagertes zweites Ringelement,
- eine an dem zweiten Ringelement befestigte Kamerabefestigungsvorrichtung, und
- eine Stabilisierungsanordnung mit wenigstens einem Bewegungssensor, insbesondere Inertialsensor und/oder Beschleunigungssensor, zur Detektion von sich auf eine an der Kamerabefestigungsvorrichtung befestigte Kamera auswirkenden Bewegungen, zur Drehung des ersten Ringelements um die Tiltachse und des zweiten Ringelements um die Rollachse ansteuerbaren Antriebsmitteln und einer zur Kompensation von mittels des wenigstens einen Bewegungssensors detektierten Bewegungen der Kamera aus einer Sollausrichtung durch Ansteuerung der Antriebsmittel ausgebildeten Steuereinrichtung.

Die Erfindung sieht also durch eine geschickte Konstruktion aus ineinander gelagerten Ringen vor, nicht nur bezüglich der Rollachse eine zuverlässige Beigehaltung der Ausrichtung der Kamera zu erlauben, sondern auch in der Tiltachse (Neigeachse), wobei sowohl bezüglich der Rollachse als auch bezüglich der Tiltachse eine aktive, Sensordaten von Bewegungssensoren auswertende Stabilisierung seitens der Steuereinrichtung stattfindet, um die Sollausrichtung schnell und einfach beizubehalten. Dabei ist es bevorzugt, jeweils den einzelnen Ringelementen zugeordnete Bewegungssensoren und dem Halterahmen zugeordnete Bewegungssensoren vorzusehen. Mit anderen Worten ist der auf die Drehbarkeit in der Rollachse bezogene Anteil der Kamerahalterungsvorrichtung, also das zweite Ringelement, nicht unmittelbar am Pendelarm gehaltert, sondern am ersten Ringelement, das eine Drehung um die Tiltachse erlaubt.

Während die Stabilisierung in der Rollachse im Wesentlichen dem Ausgleich von beispielsweise durch das Gehen oder Rennen eines Anwenders hervorgerufenen Rollbewegungen ermöglicht, geht es bei der ebenso in der Tiltachse vorgesehenen Stabilisierung insbesondere um den Ausgleich wellenartiger Auf- und Abwärtsbewegungen, die insbesondere bei der gehenden Fortbewegung einer Person auftreten können. Derartige Bewegungen treten besonders stark auf, wenn die Kamerastabilisierungsvorrichtung nach vorne geschwenkt wird und der Pendelarm in die Horizontale gerät. Dann wirken alle Bewegungen, die nicht durch das kardanische Gelenk aufgefangen werden, auf die Kamerastabilisierungsvorrichtung ein und können dank der Stabilisierungsanordnung so kompensiert werden, dass sie sich nicht auf die Kamera übertragen.

Auf diese Art und Weise erlaubt es die vorliegende Erfindung erstmals, nachdem die Ausrichtung in der Tiltachse beibehalten werden kann, die Kamera sowohl vorwärts von oben nach unten zu verschwenken wie auch seitwärts oder in Kombinationen. Die Antriebsmittel können dabei im Übrigen auch aktiv angesteuert werden, insbesondere seitens der Steuereinrichtung, um eine ausgewählte Ausrichtung bzw. eine Sollausrichtung einzustellen, so dass beispielsweise eine in höchster Position befindliche Kamera nach unten geneigt werden kann, mithin allgemein der kreative Spielraum, der dem Bediener zur Verfügung steht, deutlich erhöht wird. Diese Erweiterung der Einsatzmöglichkeit ergibt sich jedoch bereits durch die freiere Bewegbarkeit der Kamera im Raum, wie sie durch die Stabilisierung auch bezüglich der Tiltachse ermöglicht wird.

Die Kamerabefestigungsvorrichtung und mithin die Kamera befinden sich zentral innerhalb der Ringelemente, so dass es besonders vorteilhaft möglich ist, den Schwerpunkt der Kamerahalterungsvorrichtung oder zumindest des von den Ringelementen umfassten Anteils in das Zentrum der Ringelemente, mithin auf die Rollachse und idealerweise auch die Tiltachse zu legen, was eine Vielzahl von Vorteilen mit sich bringt. Idealerweise entspricht zudem die Rollachse der Bildachse bzw. Linsenachse der Kamera. Um zu erreichen, dass der Schwerpunkt zumindest des durch die Ringelemente, die Kamerabefestigungsvorrichtung und die Kamera gebildeten Anteils der Kamerahalterungsvorrichtung im Zentrum der Ringelemente auf der Rollachse und der Tiltachse liegt, kann vorgesehen sein, dass die Kamerabefestigungsvorrichtung eine Verstelleinrichtung in drei zueinander senkrechten Raumrichtungen aufweist, insbesondere derart, dass der Schwerpunkt der Ringanordnung, umfassend das erste Ringelement und das zweite Ringelement sowie eine montierte Kamera, auf der Rollachse und der Tiltachse positionierbar ist. Eine derartige Verstelleinrichtung kann im Übrigen auch dazu dienen, den Gesamtschwerpunkt der Kamerastabilisierungsvorrichtung zu justieren, worauf im Folgenden noch näher eingegangen werden wird.

Dadurch, dass der Schwerpunkt hinsichtlich der Drehungen um die Rollachse und die Tiltachse im Zentrum der Ringelemente liegt, können Bewegungen kräftearm und somit äußerst schnell kompensiert werden. Im Gegensatz zu unwuchtig konstruierten, beispielsweise L-förmige Elemente in der Kamerahalterungsvorrichtung aufweisenden Kamerastabilisierungsvorrichtungen des Standes der Technik ergibt sich somit eine deutlich verbesserte Stabilisierung, die aus der gegebenen Symmetrie folgt. Das Design der Ringelemente ist also schwerpunktsorientiert und kann durch den Halterahmen zusätzlich optimiert werden, der strikt an das Schwerpunktkonzept angepasst sein kann, insbesondere also symmetrisch ausgebildet ist und die Ringanordnung symmetrisch in der Tiltachse lagert. Zweckmäßigerweise wird der durch die Ringelemente gebildete Anteil der Halterungsvorrichtung absolut mittig in den Halterahmen eingebunden, welcher wiederum, um eine Unwucht der gesamten Kamerastabilisierungsvorrichtung zu vermeiden, absolut symmetrisch mit dem Pendelarm verbunden wird.

Durch die Anbringung der Kamera als "neutrale Masse" im Schwerpunkt geschieht die Rollstabilisierung idealerweise ausschließlich und schnell anhand der Motoren. Bekannte Ansätze, die den Schwerpunkt unterhalb der Rollachse vorgesehen haben, um die Gravitationskraft zum Stabilisieren zu nutzen, kann es zu unerwünschten Pendelbewegungen der Kamera in der Rollachse kommen. Diese treten erfindungsgemäß als weiterer Vorteil neben der bereits genannten schnellen und äußerst akkuraten Stabilisierung nicht mehr auf, da der Schwerpunkt der gezielt (zumindest im Wesentlichen) auf der Rollachse positioniert wird. Die "neutrale" Positionierung der Kamera, die die Erfindung vorschlägt, ist es also, die jegliche Art von unerwünschten Bewegungen in der Roll- und Tiltachse effektiv vermeiden kann.

Wie bereits erwähnt kann die Sollausrichtung, auf die sich die Stabilisierung bezieht, zweckmäßig extern vorgegeben werden. In diesem Kontext sehen besonders vorteilhafte Ausgestaltungen der Kamerastabilisierungsvorrichtung vor, dass eine Bedieneinrichtung vorgesehen ist, welche ein Bedienelement, beispielsweise ein Joystick, zur Einstellung einer Kameraausrichtung in der Tiltachse und in der Rollachse aufweist, wobei die Antriebsmittel in Abhängigkeit einer Bedienung des Bedienelements zur Einstellung einer angewählten Ausrichtung als Sollausrichtung, insbesondere durch die Steuereinrichtung, ansteuerbar sind, und/oder dass die Kamerastabilisierungsvorrichtung, insbesondere seitens der Stabilisierungsanordnung, eine Schnittstelle zum Empfang einer Sollausrichtung aufweist, wobei die Antriebsmittel zur Einstellung der Sollausrichtung, insbesondere durch die Steuereinrichtung, ansteuerbar sind.

Mithin kann zum einen eine manuelle Einstellung der Sollausrichtung erfolgen, wobei besonders zweckmäßig entsprechende Betätigungssignale eines beispielsweise als Joystick ausgebildeten Bedienelements bevorzugt drahtlos an die Steuereinrichtung übermittelt werden, welche diese entsprechend in eine neue Sollausrichtung überträgt und durch Ansteuerung der Antriebsmittel die Kamera in die gewollte Sollausrichtung bewegt. Die Bedieneinrichtung kann dabei Teil des zusammen mit den kardanischen Aufhängemitteln und einer Befestigungseinrichtung am Körper gebildeten Kamerastabilisierungssystems sein, so dass beispielsweise eine die Kamera führende Person die Ausrichtung unmittelbar anpassen kann; jedoch kann die Bedieneinrichtung auch extern vorgesehen werden, wozu dann zweckmäßigerweise eine entsprechende, bevorzugt drahtlose, Schnittstelle seitens der Steuereinrichtung vorgesehen ist. Über derartige Bedienelemente, insbesondere einen Joystick, können auch andere Betriebsparameter eingestellt werden, beispielsweise die Brennweite einer verwendeten Optik und dergleichen.

Eine besonders vorteilhafte Ausgestaltung der Erfindung sieht im Übrigen vor, dass an einem zur kardanischen Aufhängung des Pendelarms genutzten kardanischen Aufhängemittel (Gimbal), insbesondere an oder benachbart einem Handgriff des kardanischen Aufhängemittels, die Bedieneinrichtung und/oder ein das Bild einer an der Kamerabefestigungsvorrichtung befestigten Kamera zeigender Überwachungsmonitor von der Bewegung des Pendelarms entkoppelt angeordnet ist. Auf diese Weise kann sichergestellt werden, dass der Blickwinkel auf das Kamerabild unabhängig von der aktuellen Verschwenkung des Pendelarms und somit der Position der Kamera immer gleich bleibt, insbesondere, nachdem mittelbar oder unmittelbar ein nicht mit dem Pendelarm bewegter Teil der Koppelvorrichtung verwendet wird. Dies ist ein deutlicher Vorteil gegenüber mitbewegten Monitoren am Pendelarm. Die Übertragung des Kamerabildes an den Überwachungsmonitor kann dabei bevorzugt drahtlos oder drahtgebunden erfolgen. Insbesondere kann eine modulare Bedienerschnittstelle an dem Aufhängemittel vorgesehen sein, wobei die Bedieneinrichtung Bedienelemente zur Einstellung der Sollausrichtung und/oder für Zoom-Funktionen und/oder Focus-Funktionen und/oder Iris-Funktionen und/oder weitere Funktionen umfassen kann. Durch diese neuartige Anbringung des Überwachungsmonitors bzw. der Bedieneinrichtung müssen diese Elemente, insbesondere der Überwachungsmonitor, nicht am eigentlich bewegten Anteil der Kamerastabilisierungsvorrichtung vorgesehen sein. Das Gewicht des bewegten Anteils wird verringert, so dass die Agilität des Gesamtsystem bei guter Bedienbarkeit/Überwachbarkeit gesteigert wird. Dabei ist für einen Überwachungsmonitor zudem ein besserer Blickwinkel gegeben. Dies verbessert auch die Arbeitssicherheit. Der Bediener sieht immer ein Bild, unabhängig davon, wo sich die Kamera befindet.

Auch die Bedieneinrichtung an sich kann modular aufgebaut sein und beispielsweise ein Steuermodul zur Einstellung der Sollausrichtung und/oder weitere modulare Bedienelementmodule enthalten, welche analog und/oder digital und/oder zur drahtloses Kommunikation ausgebildet sein können.

Der Überwachungsmonitor kann über einen insbesondere steckbaren und/oder auf der Tiltachse drehbaren Monitorhalter, insbesondere ein Rohrsystem, befestigt werden. Das Rohrsystem kann Rohre mit einem Durchmesser von insbesondere 15 mm umfassen. Der Monitorhalter kann es dem Bediener erlauben, den Winkel des Monitors unabhängig vom Winkel des Monitorhalters insbesondere an dem Handgriff des Aufhängemittels einzustellen. So kann der Bediener für sich den idealen Blickwinkel auf den Monitor einstellen. Auch für die Bedienelemente einer derartigen Bedienerschnittstelle kann eine Verstellung ermöglicht werden.

Eine Stromversorgung des Monitors und/oder der Bedieneinrichtung bzw. der Bedienerschnittstelle kann über eine entsprechende Anschlusseinrichtung erfolgen, die beispielsweise an einen an einem vom Bediener getragenen Federarm vorgesehen Energiespeichermittel angeschlossen wird.

Es sei angemerkt, dass der Überwachungsmonitor auch durch ein an einem Haltemittel befestigtes Mobilgerät, beispielsweise ein Smartphone oder ein Tablet, realisiert werden kann, welches über eine drahtlose und/oder drahtgebundene Schnittstelle die Kamerabilder erhält und/oder weitere Daten austauschen kann, beispielsweise mit der Steuereinrichtung. Auch allgemein kann der Überwachungsmonitor als ein Touchscreen ausgestaltet sein und mithin Bedieneingaben entgegennehmen. Es sei angemerkt, dass gerade bei Einsatz eines Mobilgeräts auch dessen interne Inertialsensorik genutzt werden kann, um weitere Positionsinformationen zu erhalten und zu verarbeiten, beispielsweise im Rahmen von Virtual-Reality-Systemen oder sonstigen, im Folgenden noch näher erläuterten Aufnahmesteuersystemen. Auch die Steuereinrichtung kann Positionsinformationen zu dem Überwachungsmonitor zweckmäßig nutzen, insbesondere auch im Rahmen der Stabilisierung.

Besonders vorteilhafte Ausgestaltungen ergeben sich im Rahmen der vorliegenden Erfindung jedoch auch, wenn die Sollausrichtung automatisch vorgegeben wird, wobei eine derartig automatisch vorgegebene Sollausrichtung mittels einer Schnittstelle, welche Teil der Stabilisierungsanordnung, insbesondere der Steuereinrichtung, sein kann, empfangen wird. Beispielsweise kann die Kamerastabilisierungsvorrichtung derart an ein übergeordnetes Aufnahmesteuersystem angekoppelt werden, welches beispielsweise Sollausrichtungen der Kamera an entsprechende Einstellungen weiterer Aufnahmehilfsmittel, beispielsweise von Beleuchtungseinrichtungen, koppeln kann und/oder bestimmten absoluten Positionen der Kamera im Raum bestimmte Sollausrichtungen zuordnen kann. Beispielsweise wurden bereits Aufnahmesteuerungssysteme vorgeschlagen, bei denen an der Kamera eine Positionsbestimmungseinheit angeordnet wird, die die aktuelle absolute Position der Kamera an das Aufnahmesteuerungssystem übermittelt, wo den verschiedenen absoluten Positionen der Kamera geeignete Sollausrichtungen zugeordnet sind. Diese Sollausrichtungen können dann mittels der Schnittstelle von der Stabilisierungsanordnung, insbesondere also der Steuereinrichtung, empfangen werden und durch entsprechende Ansteuerung der Antriebsmittel umgesetzt werden. Diese zweckmäßige Ankopplung an übergeordnete Aufnahmesteuerungssysteme ist durch die hohe Präzision möglich, die die vorliegende Erfindung zur Verfügung stellt.

Es sei an dieser Stelle noch allgemein angemerkt, dass es zweckmäßig ist, zur Lagerung und Führung des zweiten Ringelements im ersten Ringelement ein Kugellager vorzusehen, so dass das erste Ringelement also insbesondere vollständig geführt ist. Die Antriebsmittel werden bevorzugt als motorische Antriebsmittel, insbesondere Motoren, realisiert, die ein besonders dynamisches Ansprechverhalten zeigen.

Besonders vorteilhaft ist es im Rahmen der vorliegenden Erfindung auch, wenn wenigstens ein Verbindungskabel zwischen den Bewegungssensoren sowie den Antriebsmitteln und der Steuereinrichtung und/oder einer Energiequelle im Inneren der Ringelemente und/oder des Halterahmens geführt ist. Insbesondere sind alle derartigen Verbindungskabel, die also der Signal- und/oder Energieübertragung dienen, innerhalb der Ringelemente bzw. innerhalb des Halterahmens geführt, so dass keine störenden Kabel die Funktionalität der Kamerahalterungsvorrichtung beeinträchtigen können. Auch weitere Verbindungskabel, die beispielsweise für Funktionen der befestigten Kamera vorgesehen sind, beispielsweise auf Zoomfunktionen bezogene Steuerleitungen und/oder von der Kamera aufgenommene Bilddaten übertragende Datenleitungen, können durch die Ringelemente und den Halterahmen geführt werden.

Zweckmäßigerweise kann auch bei der erfindungsgemäßen Kamerastabilisierungsvorrichtung, wie dies im Stand der Technik grundsätzlich bekannt ist, zur Ausbalancierung derselben vorgesehen sein, dass der Pendelarm auf einer zweiten, der ersten Seite bezüglich der Koppelvorrichtung gegenüberliegenden Seite wenigstens ein insbesondere anpassbares Gegengewicht zur Ausbalancierung der Kamerastabilisierungsvorrichtung bezüglich der Koppelvorrichtung aufweist und/oder die Koppelvorrichtung mittels eines Verschiebemittels entlang des Pendelarms verschiebbar ist. Beispielsweise können die Kamerahalterungsvorrichtung und das Gegengewicht an gegenüberliegenden Enden des Pendelarms vorgesehen sein. Eine Anpassung des Gegengewichts bedeutet dabei, dass das Gegengewicht wenigstens teilweise in Betrag der Masse und/oder seiner Position veränderbar ist. Dies dient letztlich der Einstellung des Schwerpunkts der gesamten Kamerastabilisierungsvorrichtung an einer geeigneten Position, insbesondere in einem engen Bereich um die Position der Koppelvorrichtung, um die zur Bewegung des Pendelarms benötigten Kräfte seitens des Bedieners, insbesondere bei von Personen getragenen Kamerastabilisierungsvorrichtungen, zu minimieren. Eine entsprechende Einstellung der Koppelvorrichtung relativ zum Schwerpunkt kann auch dann erfolgen, wenn die Koppelvorrichtung selbst entlang des Pendelarms verschiebbar ausgestaltet ist.

Möglichkeiten zum Ausbalancieren von Kamerastabilisierungsvorrichtungen sind im Stand der Technik bereits in großer Zahl bekannt und können zweckmäßigerweise auch im Rahmen der vorliegenden Erfindung eingesetzt werden. Rein beispielhaft sei in diesem Zusammenhang auf WO 03/023273 A1 und WO 02/081962 A1 verwiesen. Teil des Gegengewichts kann insbesondere auch ein Monitor sein, auf dem das Bild der Kamera angezeigt werden kann.

Um eine korrekte vertikale Ausrichtung der Kamerastabilisierungsvorrichtung zu erreichen, wird die Positionierung des Schwerpunkts meist so vorgenommen, dass die vertikale Ausrichtung bevorzugt wird, das bedeutet, soll sich die Kamera oben befinden, muss das Gegengewicht etwas schwerer sein als die Kamera; soll die Kamera unten positioniert werden, muss sich der Schwerpunkt mehr zur Kamera hin finden. Bei Kamerastabilisierungsvorrichtungen im Stand der Technik war hierfür meist eine neue Einstellung erforderlich, um stabile vertikale Ausrichtungen des Pendelarms mit der Kamera zu ermöglichen.

Eine besonders vorteilhafte Ausgestaltung der vorliegenden Erfindung, die die Handhabung der Kamerastabilisierungsvorrichtung insbesondere diesbezüglich deutlich vereinfacht, sieht vor, dass auf der Tiltachse oder eine dazu parallel Sekundärachse seitens des Halterahmens wenigstens ein wenigstens zeitweise frei drehbar gelagerter, bezüglich der Lagerung asymmetrischer Pendelkörper zur Schwerpunktsverlagerung der Kamerastabilisierungsvorrichtung vorgesehen ist, wobei mit höher angeordneter Kamerahalterungsvorrichtung der Schwerpunkt mehr zum Gegengewicht hin liegt.

Letztlich werden also durch die Pendelkörper zusätzliche Massen hinzugefügt, die sich je nach Neigung des Pendelarms zur Vertikalen in unterschiedlichen Positionen befinden, so dass sie mithin eine positive Gewichtsverlagerung erzielen, wenn die Kamerastabilisierungsvorrichtung nach vorne und schlussendlich nach unten geschwenkt wird. Diese Schwerpunktsverlagerung macht es nicht nur möglich, das Gesamtsystem mit einem Minimum an Kraft über die gesamte Wegstrecke von ganz oben nach ganz unten zu schwenken, sondern sorgen auch dafür, dass bei tiefer als das Gegengewicht befindlicher Kamera der Schwerpunkt zur Kamera hin verlagert wird, bei höher als das Gegengewicht befindlicher Kamera jedoch der Schwerpunkt mehr zu dem Gegengewicht verlagert wird, was stabile, vertikale Ausrichtungen der Kamerastabilisierungsvorrichtung vorteilhaft unterstützt.

Insbesondere kann die Ausgestaltung so sein, dass bei bei auf gleicher Höhe der Kamerahalterungsvorrichtung und des Gegengewichts an der Koppelvorrichtung befindlichem Schwerpunkt der Kamerastabilisierungsvorrichtung der Schwerpunkt bei einer höher als das Gegengewicht angeordneten Kamerahalterungsvorrichtung zum Gegengewicht hin und bei niedriger angeordneter Kamerahalterungsvorrichtung der Schwerpunkt zur Kamera hin verschoben ist.

Zweckmäßigerweise können die Pendelkörper im Wesentlichen eine halbkreisartige Form aufweisen. In jedem Fall sind die Pendelkörper unwuchtig angelenkt, wobei sie bevorzugt und bauraumsparend an einer Welle der Tiltachse hängend angeordnet werden können. Selbstverständlich ist es auch denkbar, die Pendelkörper an speziell für sie vorgesehenen Wellen und/oder in einem eigenen Kugellager vorzusehen und dergleichen.

Zweckmäßig ist es auch, wenn mehrere, insbesondere im Wesentlichen halbkreisförmige Pendelkörper vorgesehen werden, so dass durch Auswahl der verwendeten, durch die Pendelkörper bereitgestellten Masse die Geschwindigkeit des Umverteilungseffekts beeinflusst werden kann.

Vorzugsweise kann bei beidseitig symmetrisch an dem Halterahmen gelagertem ersten Ringelement beidseitig jeweils wenigstens ein Pendelkörper vorgesehen sein. Die beidseitig vorgesehenen Pendelkörper haben dann jeweils dieselbe Masse, so dass sich die zusätzlich angebrachten Gewichte hinsichtlich des Schwerpunkts ausmitteln.

Es hat sich gezeigt, dass das Vorsehen dieser Pendelkörper als besonderer Vorteil auch unterstützend gegen eine Verdrehung um die Längsachse des Pendelarms wirkt. Gerade dann, wenn sich der Pendelarm in einer im Wesentlichen horizontalen Stellung befindet, kann es bei manuell getragenem Pendelarm dazu kommen, dass dieser durch Bewegungen der sie tragenden Person verdreht wird, was unerwünscht ist. Das insbesondere beidseitige Vorsehen von Pendelkörpern wirkt gegenüber diesen unbeabsichtigten Drehungen stabilisierend.

Es kann nützlich sein, wenn das Verhalten der Pendelkörper beeinflussbar ist. Eine zweckmäßige Weiterbildung der Erfindung sieht daher vor, dass ein insbesondere magnetisch wirkendes, durch die Steuereinrichtung ansteuerbares Arretierungsmittel für die Pendelkörper vorgesehen ist. In einer konkreten Ausgestaltung kann dabei vorgesehen sein, dass mittels der Daten der Bewegungssensoren eine Neigung der Kamerastabilisierungsvorrichtung gegen die Vertikale vermessen wird, wobei erst ab einer einen Schwellwert im Bereich von 10 - 30°, insbesondere 20°, überschreitenden Neigung des Pendelarms gegen die Vertikale die Arretierungsmittel für die Pendelkörper durch die Steuereinrichtung gelöst werden und ihr unterstützendes Verhalten aufnehmen. Auch kann vorgesehen sein, dass bei einer rein seitlichen Verschwenkung des Pendelarms, bei der die Kamera von oben nach unten oder von unten nach oben bewegt wird, die Pendelkörper durch das Arretierungsmittel zumindest bis die Endstellung oder ein bestimmter Grenzwinkel gegenüber der Vertikalen erreicht sind, festgehalten werden.

Vorzugsweise ist die Kamerahalterungsvorrichtung derart an dem Pendelarm befestigt, dass sich ihr Schwerpunkt auf einer durch den Schwerpunkt des Pendelarms verlaufenden Längsachse des Pendelarms befindet. Idealerweise finden sich sowohl der Schwerpunkt der Kamerahalterungsvorrichtung als auch der eines vorgesehenen Gegengewichts auf dieser Längsachse, auf der mithin auch der Schwerpunkt der gesamten Kamerastabilisierungsvorrichtung zu liegen kommt. Auch auf diese Weise es ist insbesondere möglich, das beschriebene Schwerpunkt-Designkonzept der Ringelemente mit einem Schwerpunkt-Designkonzept bezüglich der gesamten Kamerastabilisierungsvorrichtung zu kombinieren. Zweckmäßig wird, um diese Konfiguration aufrecht zu erhalten, auch auf einen die Kamerahalterungsvorrichtung an den Pendelarm koppelnden, Verstellungen erlaubenden Kreuztisch oder eine sonstige Kopplungsanordnung zur Verstellung verzichtet. So wird vermieden, dass sich der Schwerpunkt der Kamerahalterungsvorrichtung von der Längsachse herunter verschiebt und die Kamerastabilisierungsvorrichtung insgesamt aus der Balance gerät.

Neben dem veränderbaren Gegengewicht, wie bereits beschrieben, und der längsverschiebbaren Koppelvorrichtung sind auch andere Möglichkeiten denkbar, um die Gesamtbalance der Kamerastabilisierungsvorrichtung geeignet einzustellen. Zum einen kann hierfür die bereits erwähnte Verstelleinrichtung genutzt werden, welche mithin nicht allein dazu dienen kann, den Schwerpunkt der durch die Ringelemente und die Kamera gebildeten Ringanordnung auf die Rollachse und die Tiltachse zu legen, sondern auch das Gesamtsystem besser auszubalancieren.

Vorteilhafterweise kann ferner vorgesehen sein, dass zur Nachjustierung des Schwerpunkts der Kamerahalterungsvorrichtung bezüglich der Längsachse wenigstens ein in einer nicht zur Richtung der Längsachse parallelen Richtung verschiebbares Massenelement an der Kamerahalterungsvorrichtung vorgesehen ist. Wird beispielsweise der Halterahmen über eine zentrale Trägerplatte mittig mit dem Pendelarm verbunden, können an einer Unterseite dieser zentralen Trägerplatte seitlich verschiebbare Massenelemente vorgesehen sein, die geeignet sind, eventuell nötige Korrekturen der seitlichen Lage der Kamerastabilisierungsvorrichtung vorzunehmen. Die Massenelemente können hierbei beispielsweise unter Einsatz von Schwalbenschwänzen verschiebbar montiert werden. Besonders bevorzugt ist es in diesem Kontext, wenn wenigstens eines der Massenelemente die Steuereinrichtung und/oder einen Teil der Steuereinrichtung umfasst. So können als Massenelemente beispielsweise in Gehäusen befindliche Elektronikkomponenten der Steuereinrichtung und/oder Schnittstellen enthaltende Gehäuse verwendet werden, um zusätzliche Massen an dieser Stelle zu vermeiden.

Wie bereits erwähnt, können zur Positionierung des Schwerpunkts der Kamerastabilisierungsvorrichtung entlang der Längsachse bereits aus dem Stand der Technik bekannte Varianten eingesetzt werden, insbesondere durch Anpassung der Gegengewichte, beispielsweise über das Verfahren von Batterien, oder dergleichen.

Wie bereits angedeutet wurde, hat die Verwendung von Pendelkörpern einen bezüglich einer "äußeren Rollachse", also der horizontalen Ausrichtung der Kamerahalterungsvorrichtung, stabilisierenden Effekt. Um hier auf andere Weise Verbesserungen zu realisieren und/oder weitere Verbesserungen zu schaffen, sieht eine bevorzugte Ausgestaltung der Erfindung vor, dass das erste Ringelement um eine bei nicht durch Drehung um die Tiltachse geneigter Kamera zur Rollachse parallele Schwenkachse schwenkbar in dem Halterahmen gelagert ist. Eine derartige Schwenkachse wirkt letztlich als eine Art Hilfsachse bzw. "äußere Rollachse", und erlaubt es, beispielsweise während der Vorwärtsbewegung des Pendelarms mögliche störende seitliche Einflüsse des eigentlichen Stabilisierungssystems in der horizontalen Position zu kompensieren. Die Schwenkbarkeit um die Schwenkachse erlaubt es, die Ringanordnung mit den Ringelementen und der darin befestigten Kamera gegen die störenden seitlichen schwenkartigen Bewegungen, die beispielsweise durch die Gehbewegung eines Bedieners verursacht werden können, zu schützen. Dabei hat sich gezeigt, dass eine sehr geringe Verschwenkbarkeit hier ausreichend ist, beispielsweise ein gesamter Verschwenkbereich von 10° (+/- 5° aus der Grundstellung).

In vorteilhafter konkreter Ausgestaltung kann vorgesehen sein, dass die an dem ersten Ringelement befestigten Antriebsmittel für die Drehung um die Tiltachse in einem kreissegmentartigen Führungsabschnitt des Halterahmens geführt sind, insbesondere an zwei gegenüberliegenden Seiten des Halterahmens. Die Antriebsmittel, die dann vollständig die Ringelemente tragen und die Drehung um die Tiltachse bewirken, werden hierbei nicht selbst verdreht und können daher, entsprechend geführt im Halterahmen, die Verschwenkung um die Schwenkachse bereitstellen. Insbesondere sei darauf hingewiesen, dass auch eine Ausgestaltung denkbar ist, in der der Halterahmen selbst als vollständiger Ring ausgebildet ist.

Besonders vorteilhaft ist es, wenn Antriebsmittel zur Verschwenkung um die Schwenkachse vorgesehen sind und die Steuereinrichtung zur Ansteuerung der Antriebsmittel derart, dass eine vorbestimmte horizontale Ausrichtung des ersten Ringelements beibehalten wird, ausgebildet ist. Letztlich wird also die Stabilisierungsanordnung in dieser Ausgestaltung gegenständlich und funktional erweitert, um auch ungewollte Rollbewegungen, insbesondere bei Verschwenkung der gesamten Kamerastabilisierungsvorrichtung nach vorne und bei horizontalen Ausrichtungen des Pendelarms, korrigieren zu können und die Gesamtstabilisierung so weiter zu verbessern. Seitens des Halterahmens vorhandene Bewegungssensoren liefern hierfür wesentliche Daten.

Eine andere Weiterbildung der Erfindung sieht vor, dass der Halterahmen sich vom Pendelarm her zur Halterung der Ringelemente aufweitend ausgebildet ist. Beispielsweise kann der Halterahmen vier seitliche Halterohre umfassen, die einen schräg verlaufenden, geknickten Abschnitt umfassen, so dass eine Vergrößerung der Abstände zwischen den ringelementseitigen Endpunkten im Vergleich zu den pendelarmseitigen Endpunkten entsteht. Auf diese Weise kann eine Trägerplatte, die den Halterahmen zum Pendelarm hin abschließt, schlank gehalten werden. Diese wenig auskragende Ausgestaltung kann über einen Teil der Halterohre bis zu dem schräg verlaufenden Verbreiterungsabschnitt erweitert werden. Dies bietet einem Bediener, der die Kamerastabilisierungsvorrichtung trägt, eine äußerste große Bewegungsfreiheit, insbesondere im Hinblick auf einen körpernah genutzten, zusätzlichen Federarm, der häufig voluminös ausgestaltet ist.

Es sei an dieser Stelle noch angemerkt, dass der Pendelkörper auch anderweitig realisiert bzw. angeordnet sein kann. So kann vorgesehen sein, dass auf einer zu der Tiltachse parallelen Sekundärachse an der der Kamerahalterungsvorrichtung gegenüberliegenden Ende des Pendelarms, insbesondere an dem Gegengewicht, wenigstens ein wenigstens zeitweise frei drehbar gelagerter, bezüglich der Lagerung asymmetrischer Pendelkörper zur Schwerpunktsverlagerung der Kamerastabilisierungsvorrichtung vorgesehen ist, wobei mit höher angeordneter Kamera der Schwerpunkt mehr zum Gegengewicht hin liegt. Dabei ist eine motorisierte Realisierung der Drehung des Pendelkörpers besonders bevorzugt, um diese gewünschte, oben bereits näher erläuterte Wirkung zu erreichen.

Jedoch kann auch allgemein, mithin auch bei halterahmenseitig vorgesehenem Pendelkörper, zweckmäßig vorgesehen sein, dass einer Pendelwelle des wenigstens einen Pendelkörpers ein steuerbarer Motor zur Drehung des Pendelkörpers zugeordnet ist. Auf diese Weise wird also nicht oder nicht nur die Erdanziehungskraft genutzt, um die Schwerpunktsverlagerung zu erreichen, sondern es ist insbesondere möglich, mit Hilfe des Motors den wenigstens einen Pendelkörper schneller in die nötige Position zu verbringen als dies die Gravitationskonstante zuließe. So kann auch die Zeit verkürzt werden, um die Kamera von einer oberen in eine untere Position zu bringen. Eine derart "motorisierte Pendelachse" erlaubt es ferner, unerwünschtes Pendeln des Pendelkörpers bei schnellen Bewegungen zu unterdrücken. Dem Motor kann eine Motorsteuereinheit zugeordnet sein, welche bevorzugt über Lage- und/oder Beschleunigungssensoren verfügt, so dass sie die Steuerung des Motors autark realisieren kann, um die Schwerpunkt der Kamerastabilisierungsvorrichtung in der beschriebenen Weise schnell geeignet einzustellen.

Der wenigstens eine Pendelkörper kann zudem als ein Kreiselstabilisator ausgebildet sein. So lässt sich die Stabilität des Gesamtsystems, insbesondere in der Pan- und der Rollachse, weiter erhöhen. Eine hochfrequente Rotation innerhalb des Kreiselstabilisators wirkt stabilisierend. Der 45° zu einer Vertikalrichtung des Pendelkörpers verkippte, drehende Kreiselkörper addiert eine Trägheit auf die Pan- und Rollachse der Kamerastabilisierungsvorrichtung.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine erfindungsgemäße Kamerastabilisierungsvorrichtung,
- Fig. 2: eine perspektivische Ansicht einer erfindungsgemäßen Kamerahalterungsvorrichtung, wie sie in der Kamerastabilisierungsvorrichtung nach Fig. 1 eingesetzt wird,
- Fig. 3: eine Frontansicht der Ringelemente der Kamerahalterungsvorrichtung der Fig. 2,
- Fig. 4: eine funktionale Darstellung wesentlicher Komponenten der Kamerastabilisierungsvorrichtung,
- Fig. 5 - 9: Skizzen in verschiedenen Stellungen der Kamerastabilisierungsvorrichtung zur Erläuterung der Funktion von Pendelkörpern,
- Fig. 10: eine Skizze zur Erläuterung einer Ausführungsform mit Arretierungsmitteln,
- Fig. 11: eine modifizierte Ausführungsform eines Halterahmens mit Führungsabschnitten für Antriebsmittel, und
- Fig. 12: eine Detailansicht eines kardanischen Aufhängemittels der Koppelvorrichtung.

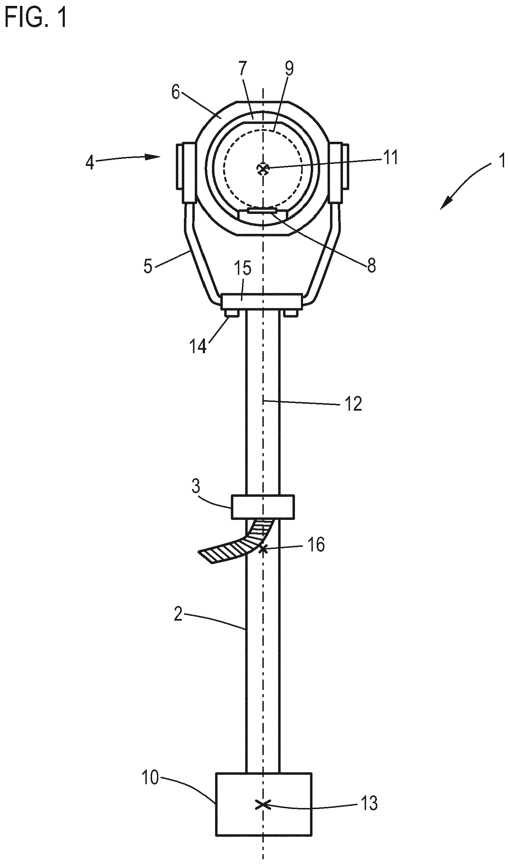

Fig. 1 zeigt eine teilweise vereinfachte Ansicht einer erfindungsgemäßen Kamerastabilisierungsvorrichtung 1. Diese weist, wie grundsätzlich bekannt, einen Pendelarm 2 auf, der über eine Kopplungseinrichtung 3 mit einem kardanischen Aufhängemittel (hier nicht näher dargestellt) verbunden werden kann. Das kardanische Aufhängemittel kann mit einem Tragearm verbunden sein, der an einem von einer Person getragenen Kleidungsstück befestigt ist.

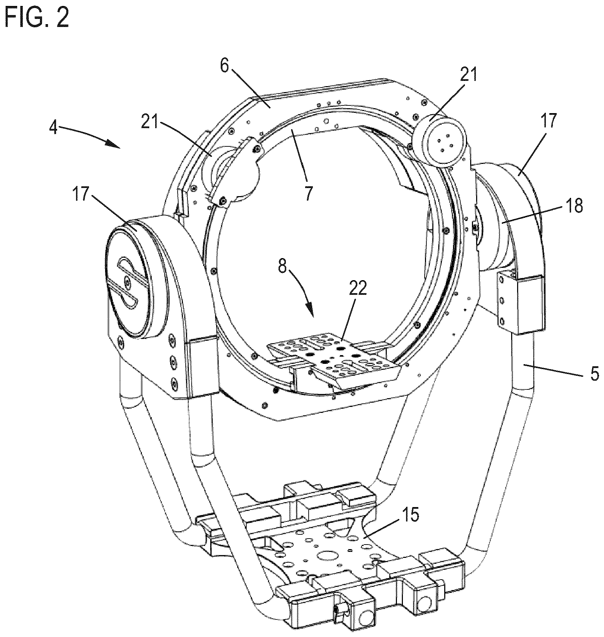

An einem Ende des Pendelarms 2 ist eine Kamerahalterungsvorrichtung 4 angeordnet, welche im Hinblick auf die Fig. 2 - 4 näher erläutert werden wird und einen Halterahmen 5 umfasst, in dem zwei Ringelemente 6, 7 gelagert sind. Das innere, zweite Ringelement 7 weist eine Kamerabefestigungsvorrichtung 8, auf der eine hier nur angedeutete Kamera 9 befestigt wurde.

Um ein Ausbalancieren gegenüber der Kamerahalterungsvorrichtung 4 mit der Kamera 9 zu ermöglichen, ist am anderen Ende des Pendelarms 2 ein Gegengewicht 10 vorgesehen, so dass der Schwerpunkt der Kamerastabilisierungsvorrichtung 1 im Bereich der Koppelvorrichtung 3 zu liegen kommt. Das Gegengewicht 10 kann beispielsweise durch eine Energiequelle, insbesondere eine Batterie, einen Monitor und dergleichen, wie es grundsätzlich bekannt ist, gebildet werden. Das Gegengewicht 10 ist zur Einstellung des Schwerpunktes der Kamerastabilisierungsvorrichtung 1 anpassbar, beispielsweise, indem die Batterie bzw. Teile der Batterie in ihrer Position veränderbar sind, Massenelemente hinzufügbar oder entfernbar sind und dergleichen. Ferner ist die Koppelvorrichtung 3 mittels hier nicht näher gezeigter Verschiebemittel entlang des Pendelarms 2 verschiebbar.

Die Kamerahalterungsvorrichtung 4 ist so ausgebildet, dass zum einen der Schwerpunkt der Ringanordnung mit den Ringelementen 6, 7 und der Kamera 9 im Zentrum der Ringelemente 6, 7 liegt, wobei zudem der hier nicht näher gezeigte Schwerpunkt der Kamerahalterungsvorrichtung 4 mit der Kamera 9 wie auch der Schwerpunkt 11 auf einer Längsachse 12 des Pendelarms 2 zu liegen kommen, auf der auch der Schwerpunkt 13 des Gegengewichts liegt. Seitliche Abweichungen des Schwerpunkts der Kamerahalterungsvorrichtung 4 mit Kamera 9 können über verschiebbare Massenelemente 14, die unterhalt einer Trägerplatte 15 des Halterahmens 5 angeordnet sind, korrigiert werden. Hierzu sind die Massenelemente 14 gleitend, aber arretierbar, in einer schwalbenschwanzartigen Führung (hier nicht näher dargestellt) gelagert.

Nachdem die Kamerastabilisierungsvorrichtung 1 vorliegend in einer vertikalen Ausrichtung gezeigt ist, in der die Kamera 9 oben angeordnet ist, befindet sich der Schwerpunkt 16 der Kamerastabilisierungsvorrichtung 1 von der Koppelvorrichtung 3 aus betrachtet eher nach unten zum Gegengewicht 10 hin, so dass eine stabile Vertikalstellung erreicht wird. Wie dies erreicht wird, wird im Folgenden noch näher erläutert.

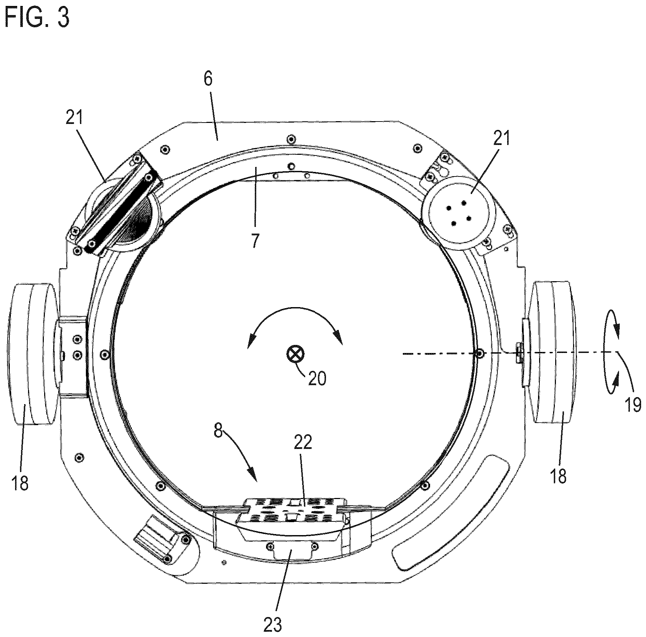

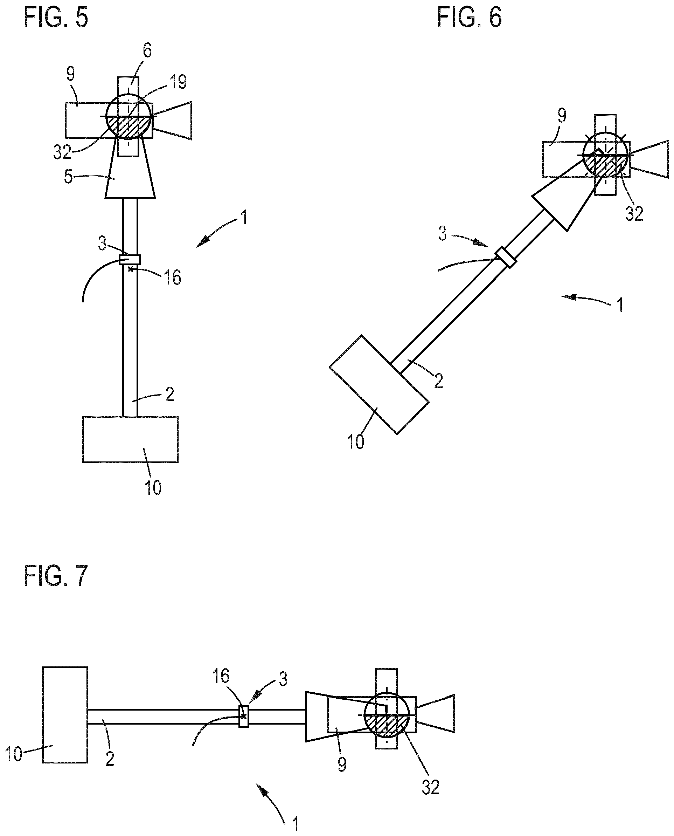

Fig. 2 zeigt eine perspektivische Ansicht der Kamerahalterungsvorrichtung 4, die, wie bereits erwähnt, zunächst den Halterahmen 5 mit der Trägerplatte 15 aufweist, der symmetrisch ausgebildet ist und mittig über entsprechende Befestigungsmittel an einem Ende des Pendelarms 2 befestigt werden kann. Mit seiner Außenseite im Halterahmen 5 drehbar gelagert ist zunächst das erste, äußere Ringelement 6, wobei in den gezeigten Gehäusen 17 Antriebsmittel 18 enthalten sind, die eine gesteuerte Drehung des ersten Ringelements 6 um eine Tiltachse 19 (vgl. die Vorderansicht der Fig. 3) erlauben. In den Gehäusen 17 sind freihängend an der Welle zur Drehung um die Tiltachse 19 ferner Pendelkörper unwuchtig angelenkt, die im Hinblick auf die Fig. 5 - 9 im Folgenden noch näher erläutert werden.

Das zweite Ringelement 7 ist wiederum innerhalb des ersten Ringelements 6, entlang der Innenseite (also am Innenumfang) des ersten Ringelements 6, drehbar gelagert, und zwar um eine Rollachse 20 (vgl. wiederum die Frontansicht der Fig. 3) drehbar, die zumindest parallel zur Bildachse der Kamera 9 ist. Zur drehbaren Lagerung des Ringelements 7 in dem Ringelement 6 wird ein hier näher gezeigtes Kugellager eingesetzt. Auch eine Drehung des zweiten Ringelements 7 in dem ersten Ringelement 6 kann durch entsprechende Antriebsmittel 21 erzielt werden.

Die Fig. 2 und 3 zeigen ferner die Kamerabefestigungsvorrichtung 8, welche vorliegend eine Befestigungsplatte 22 mit verschiedenen Befestigungsmöglichkeiten aufweist. Um die Positionierung des Schwerpunkts 11 der Ringanordnung mit Kamera im Zentrum derselben, also sowohl auf der Rollachse 20 wie auch auf der Tiltachse 19, die hierzu senkrecht steht, zu erreichen, sind in Fig. 3 ferner Verstellmittel 23 angedeutet, die eine Verstellung der Befestigungsplatte 22 und somit der Kamera 9 in drei zueinander senkrechten Raumrichtungen erlaubt. Dies kann auch benutzt werden, um insgesamt den Schwerpunkt 16 der Kamerastabilisierungsvorrichtung 1 korrekt einzustellen.

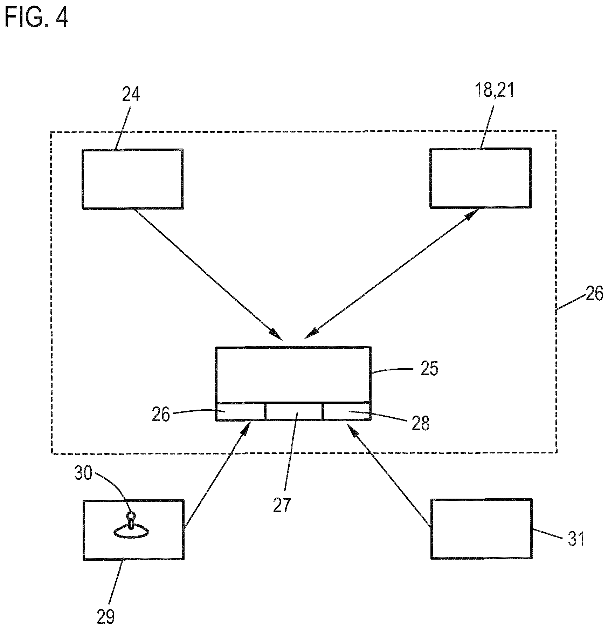

In dem ersten Ringelement 6, dem zweiten Ringelement 7 und dem Halterahmen 5 sind nun ferner insbesondere als Inertialsensoren und/oder Beschleunigungssensoren ausgebildete Bewegungssensoren vorgesehen, die hier nicht näher gezeigt sind und mit denen ungewollte Bewegungen, die zu einer Veränderung der Ausrichtung der Kamera 9, mithin zu einer Abweichung von einer Sollausrichtung, führen können, vermessen werden können. Die Sensordaten werden, wie im Hinblick auf Fig. 4 näher erläutert werden soll, für eine geregelte Stabilisierung der Kamera 9 in der Sollausrichtung eingesetzt.

Hierzu bilden die Bewegungssensoren 24, die Antriebsmittel 18, 21 und eine Steuereinrichtung 25 eine Stabilisierungsanordnung 26. Die Steuereinrichtung 25, die durch entsprechende Elektronikkomponenten und/oder Softwarekomponenten realisiert ist, nimmt die Sensordaten der Bewegungssensoren 24 entgegen und steuert resultierend die Antriebsmittel 18, 21 so an, dass eine Abweichung der Kamera 9 von der Sollausrichtung kompensiert wird. Nachdem die Kamera 9, wie beschrieben, im Schwerpunkt 11 der Ringanordnung gelagert ist, sind hierfür nur äußerst geringe Kräfte erforderlich, so dass äußerst schnell, effizient und präzise in der Sollausrichtung stabilisiert werden kann.

Die Steuereinrichtung stellt ferner Schnittstellen 26, 27, 28 zur Verfügung, die teilweise der Datenübertragung von und zu der Kamera 9 dienen können, teilweise aber auch den Datenaustausch mit externen Systemen und Vorrichtungen hinsichtlich der Sollausrichtung und der Stabilisierung betreffen können.

So handelt es sich bei der Schnittstelle 26 um eine drahtlose Kommunikationsschnittstelle, über die Daten einer Bedieneinrichtung 29 mit wenigstens einem hier als Joystick ausgebildeten Bedienelement 30 empfangen werden können. Über das wenigstens eine Bedienelement 30 kann die Sollausrichtung, auf die stabilisiert wird, nach Wunsch eines Bedieners verändert werden. Eine über das wenigstens eine Bedienelement 30 ausgewählte neue Sollausrichtung kann über die Schnittstelle 26 seitens der Steuereinrichtung 25 empfangen werden, welche die Antriebsmittel 18, 21 derart ansteuert, dass die neue Sollausrichtung durch die Kamera 9 eingenommen wird.

Die Schnittstelle 28 dient dem drahtlosen Datenaustausch mit einem übergeordneten Aufnahmesteuerungssystem 31, welches Sollausrichtungen, beispielsweise in Abhängigkeit einer aktuellen Position der Kamera 9, die von einer Positionsbestimmungseinheit an der Kamera 9 geliefert werden kann, automatisch Sollausrichtungen vorgeben und der Steuereinrichtung 25 zur Verfügung stellen kann. Ein derartiges Aufnahmesteuerungssystem 31 kann auch verschiedene Komponenten der Aufnahmeumgebung koordinieren, beispielsweise die Kamera 9 mit zur Ausleuchtung verwendeten Beleuchtungseinrichtungen und dergleichen.

Es sei an dieser Stelle noch angemerkt, dass jegliche Verbindungskabel zum Signaltransport und/oder Energietransport zwischen den Komponenten der Stabilisierungsanordnung 26 und auch von und zu der Kamera 9 innerhalb der Ringelemente 6, 7 und des Halterahmens 5 geführt sind, so dass die entsprechenden Verbindungskabel Bewegungs- und Stabilisierungsvorgänge nicht stören. Ferner können Komponenten der Steuereinrichtung 25, beispielsweise Elektronikkomponenten und/oder Komponenten der Schnittstellen 26, 27 und 28, gemeinsam mit einem entsprechenden Gehäuse die bereits beschriebenen Masseelemente 14 bilden.

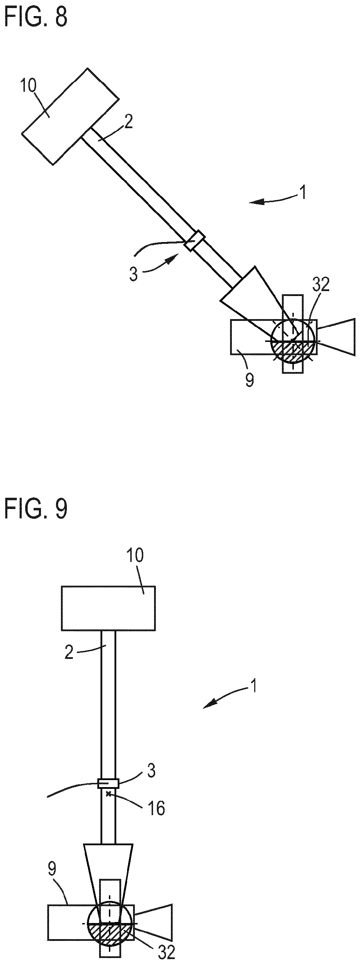

Wie bereits erwähnt wurde, sind in den gegenüberliegenden Gehäusen 17 gegenüberliegende, an der Tiltachse 19 angelenkte Pendelkörper vorgesehen, die der automatischen Verschiebung des Schwerpunkts 16 der Kamerastabilisierungsvorrichtung 1 bezüglich der Kopplungsvorrichtung 3 genauso dienen wie einer einfacheren und stabileren Handhabbarkeit der Kamerastabilisierungsvorrichtung 1. Dies sei nun im Hinblick auf die Fig. 5 - 9 näher erläutert, die die Kamerastabilisierungsvorrichtung 1 in verschiedenen Stellungen während eines Kippens der Kamera 9 aus einer höchsten Position (vgl. Fig. 5) nach vorne in eine niedrigste Position (vgl. Fig. 9) zeigen. Dieser Kippvorgang nach vorne, wie er in den Fig. 5 - 9 gezeigt ist, wird bei der Kamerastabilisierungsvorrichtung 1 erst dadurch ermöglicht, dass die Sollausrichtung der Kamera 9 auch bezüglich der Tiltachse 19 stabilisiert wird, was insgesamt für einen größeren Freiraum von möglichen Kamerabewegungen sorgt. Wie aus den Fig. 5 - 9 auch deutlich zu erkennen ist, bleibt die horizontale Sollausrichtung der Kamera 9 dank der Aufhängung des ersten Ringelements 6 in der Tiltachse 19 erhalten.

Gezeigt ist in den Fig. 5 - 9 nun jedoch auch ferner die relative Positionierung des frei schwenkbar mit der Schwerkraft an der Tiltachse 19 aufgehängten, hier im Wesentlichen halbkreisförmigen Pendelkörpers 32. Dieser sorgt für eine Massenverlagerung und letztlich eine Schwerpunktsverlagerung des Schwerpunkts 16. Wie Fig. 5 zeigt, ist die Masse des Pendelkörpers 32 in der dargestellten Vertikalstellung der Kamerastabilisierungsvorrichtung 1 zum Gegengewicht 10 hin orientiert, so dass mithin auch der Schwerpunkt 16 in diese Richtung verschoben ist. Das bedeutet aber, dass ausgehend von der Koppelvorrichtung 3 der untere Anteil schwerer ist und somit die Kamera 9 in der dargestellten vertikalen Stellung stabilisiert ist.

Wird die Kamerastabilisierungsvorrichtung 1 nun mittels des Pendelarms 2 nach vorne verschwenkt, wird über die Zwischenstellung in Fig. 6 die Horizontalstellung der Fig. 7 erreicht. Dort verteilt sich nun die Masse des Pendelkörpers 32 gleichmäßig in beide seitlichen Richtungen, so dass der Schwerpunkt 16 in diesem Beispiel genau im Ankopplungspunkt der Koppelvorrichtung 16 zu liegen kommt. Dennoch hat sich gezeigt, dass die ja beidseitig vorgesehenen Pendelkörper 32 die Anordnung auch gegen Rollverdrehungen um die Längsachse 12, wie sie durch die Bewegungen einer Bedienperson leicht auftreten können, stabilisiert.

In der weiteren Bewegung über die Fig. 8 hin zur Fig. 9 verlagert sich nun ein zunehmender Massenanteil des Pendelkörpers 32 von dem Gegengewicht 10 weg, so dass auch der Schwerpunkt 16 zur Kamera 9 hin von der Koppelvorrichtung 3 wegwandert und somit die Bewegung in die der Fig. 5 entgegengesetzte Vertikalstellung der Fig. 9 unterstützt, in der der Schwerpunkt 16 dann maximal zur Kamera 9 hin verschoben ist, welche mithin stabil in der Vertikalstellung unten gehalten wird.

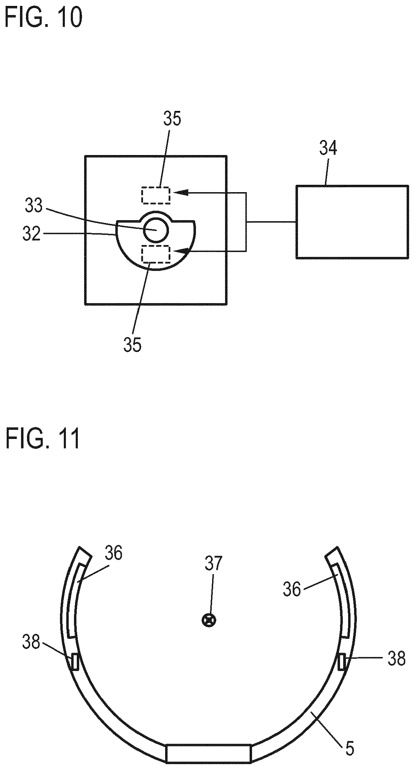

Fig. 10 illustriert eine modifizierte Ausführungsform, in der der hier auf einer Welle 33 gleitend und unwuchtig angelenkte im Wesentlichen halbkreisförmige Pendelkörper 32, der magnetisch, insbesondere metallisch, ausgebildet ist, durch ein magnetisch wirkendes, durch die Steuereinrichtung 25 ansteuerbares Arretierungsmittel 34 arretiert werden kann. Hierzu weist das Arretierungsmittel 34 Elektromagnete 35 auf, die bei Betrieb eine anziehende Wirkung auf den Pendelkörper 32 ausüben und diesen in seiner aktuellen Stellung arretieren.

Mittels der Bewegungssensoren 24 kann die Neigung der Kamerastabilisierungsvorrichtung 1 aus der Vertikalen ermittelt werden. Vorliegend werden die Pendelkörper 32 solange arretiert, bis die Neigung aus der Vertikalen einen Wert von 20° überschritten hat. Selbstverständlich sind auch andere konkrete Ausgestaltungen dieser Ausführungsform denkbar.

Um eine bessere Stabilisierung der Sollausrichtung der Kamera auch gegenüber den bereits erwähnten Verdrehungen des Pendelarms 2 um seine Längsachse 12 zu erreichen, wie sie besonders häufig bei horizontalen Stellungen der Kamerastabilisierungsvorrichtung 1 auftreten, sieht eine weitere, modifizierte Ausführungsform der Kamerastabilisierungsvorrichtung 1, die in Fig. 11 dargestellt ist, seitens des Halterahmens 5 Führungsabschnitte 36 vor, in denen die Antriebsmittel 18 zur Bewegung um die Tiltachse 19 derart gelagert sind, dass die gesamte Ringanordnung um eine als äußere Rollachse beschreibbare Schwenkachse 37 verschwenkbar sind, vorliegend in einem Winkelbereich von 10°, also +/- 5° um eine Grundstellung. Dies ermöglicht es, die Horizontalstellung der Ringanordnung verbessert sicherzustellen, wenn der Pendelarm 2 verdreht wird, nachdem Verschwenkungen um die Schwenkachse 37 automatisiert durch Antriebsmittel 38, die hier nur schematisch dargestellt sind, erreicht werden können. Nachdem auch Bewegungssensoren 24 im Halterahmen 5 vorgesehen sind, kann die Steuereinrichtung 25 deren Sensordaten nutzen, um entsprechende Verdrehungen des Pendelarms 2 festzustellen und die Antriebsmittel 38 zur Kompensation derselben anzusteuern.

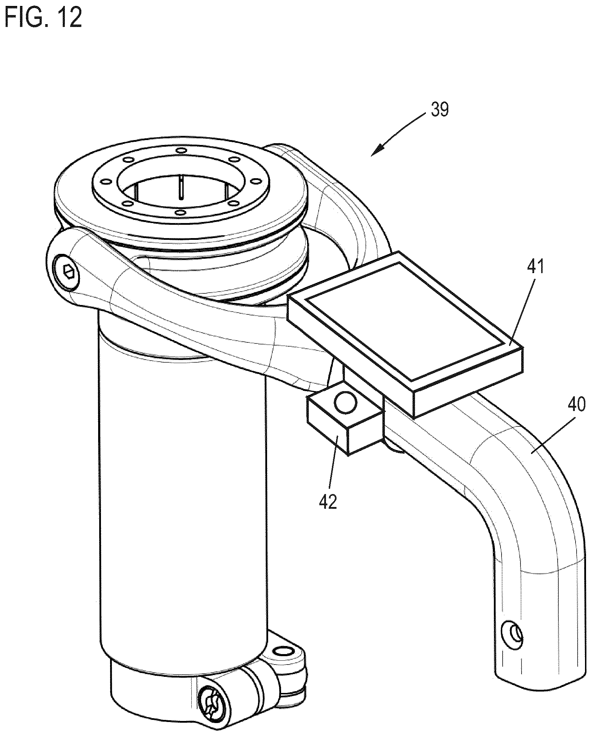

Fig. 12 zeigt eine genauere Darstellung eines kardanischen Aufhängemittels 39 der Koppelvorrichtung 3. Ersichtlich ist an einem von dem Pendelarm 2 bereits bewegungsentkoppelten Handgriff 40 ein Überwachungsmonitor 41 befestigt. Bei diesem kann es sich beispielsweise um ein Mobilgerät, beispielsweise ein Smartphone, handelt, das mittels eines Haltemittels 42 befestigt wurde und über eine drahtlose Schnittstelle kommuniziert, so dass insbesondere ein Bild der Kamera 9 angezeigt werden kann. Auch drahtgebundene Datenübertragung ist möglich.

## Patentansprüche

1. Kamerastabilisierungsvorrichtung (1), aufweisend einen über eine Koppelvorrichtung (3) kardanisch aufhängbaren, länglichen Pendelarm (2), der auf einer ersten Seite der Koppelvorrichtung (3) eine Kamerahalterungsvorrichtung (4) aufweist, wobei die Kamerahalterungsvorrichtung (4) umfasst:
- ein erstes Ringelement (6),
- ein innerhalb des ersten Ringelementes (6) um eine Rollachse (20) drehbar, insbesondere konzentrisch zu dem ersten Ringelement (6), gelagertes zweites Ringelement (7),
- eine an dem zweiten Ringelement (7) befestigte Kamerabefestigungsvorrichtung (8), und
- eine Stabilisierungsanordnung (26) mit wenigstens einem Bewegungssensor (24) zur Detektion von sich auf eine an der Kamerabefestigungsvorrichtung (8) befestigte Kamera (9) auswirkenden Bewegungen, zur Drehung des zweiten Ringelements (7) um die Rollachse (20) ansteuerbaren Antriebsmitteln (18, 21) und einer zur Kompensation von mittels des wenigstens einen Bewegungssensors (24) detektierten Bewegungen der Kamera aus einer Sollausrichtung durch Ansteuerung der Antriebsmittel (18, 21) ausgebildeten Steuereinrichtung (24),
**dadurch gekennzeichnet,**
**dass** die Kamerahalterungsvorrichtung (4) ferner einen äußeren Halterahmen (5) umfasst, der an dem Pendelarm (2) befestigt ist, wobei das erste Ringelement (6) in dem Halterahmen (5) gelagert und um eine Tiltachse (19) drehbar ist, wobei die Rollachse (20) des zweiten Ringelements (7) zu der Tiltachse (19) senkrecht steht, und wobei die Antriebsmittel (18, 21) ferner zur Drehung des ersten Ringelements (6) um die Tiltachse (19) ansteuerbar sind.

2. Kamerastabilisierungsvorrichtung nach Anspruch 1, **dadurch gekennzeichnet, dass** jeweils den einzelnen Ringelementen (6, 7) zugeordnete Bewegungssensoren (24) und/oder dem Halterahmen (5) zugeordnete Bewegungssensoren (24) vorgesehen sind.

3. Kamerastabilisierungsvorrichtung nach Anspruch 1 oder 2, **dadurch gekennzeichnet, dass** die Kamerabefestigungsvorrichtung (8) eine Verstelleinrichtung (23) in drei zueinander senkrechten Raumrichtungen derart aufweist, dass der Schwerpunkt (11) der Ringanordnung, umfassend das erste Ringelement (6) und das zweite Ringelement (7) sowie eine montierte Kamera (9), auf der Rollachse (20) und der Tiltachse (19) positionierbar ist und/oder ein Gesamtschwerpunkt (16) der Kamerastabilisierungsvorrichtung (1) justierbar ist.

4. Kamerastabilisierungsvorrichtung nach einem der vorangehenden Ansprüche, **dadurch gekennzeichnet, dass** eine Bedieneinrichtung (29) vorgesehen ist, welche ein Bedienelement (30) zur Einstellung einer Kameraausrichtung in der Tiltachse (19) und der Rollachse (20) aufweist, wobei die Antriebsmittel (18, 21) in Abhängigkeit einer Bedienung des Bedienelements (31) zur Einstellung einer angewählten Ausrichtung als Sollausrichtung, insbesondere durch die Steuereinrichtung (25), ansteuerbar sind, und/oder dass die Kamerastabilisierungsvorrichtung (1), insbesondere seitens der Stabilisierungsanordnung (26), eine Schnittstelle (27, 29) zum Empfang einer Sollausrichtung aufweist, wobei die Antriebsmittel (18, 21) zur Einstellung der Sollausrichtung, insbesondere durch die Steuereinrichtung (25), ansteuerbar sind.

5. Kamerastabilisierungsvorrichtung nach einem der vorangehenden Ansprüche, **dadurch gekennzeichnet, dass** der Pendelarm (2) auf einer zweiten, der ersten Seite bezüglich der Koppelvorrichtung (3) gegenüberliegenden Seite wenigstens ein insbesondere anpassbares Gegengewicht (10) zur Ausbalancierung der Kamerastabilisierungsvorrichtung (1) bezüglich der Koppelvorrichtung (3) aufweist und/oder die Koppelvorrichtung (3) mittels eines Verschiebemittels entlang des Pendelarms (2) verschiebbar ist.

6. Kamerastabilisierungsvorrichtung nach Anspruch 5, **dadurch gekennzeichnet, dass** auf der Tiltachse (19) oder einer dazu parallelen Sekundärachse seitens des Halterahmens (5) wenigstens ein wenigstens zeitweise frei drehbar gelagerter, bezüglich der Lagerung asymmetrischer Pendelkörper (32) zur Schwerpunktsverlagerung der Kamerastabilisierungsvorrichtung (1) vorgesehen ist, wobei mit höher angeordneter Kamera (9) der Schwerpunkt (16) mehr zum Gegengewicht (10) hin liegt.

7. Kamerastabilisierungsvorrichtung nach Anspruch 6, **dadurch gekennzeichnet, dass** bei beidseitig symmetrisch an dem Halterahmen (5) gelagertem ersten Ringelement (6) beidseitig jeweils wenigstens ein Pendelkörper (32) vorgesehen ist.

8. Kamerastabilisierungsvorrichtung nach Anspruch 6 oder 7, **dadurch gekennzeichnet, dass** ein insbesondere magnetisch wirkendes, durch die Steuereinrichtung (25) ansteuerbares Arretierungsmittel (34) für die Pendelkörper (32) vorgesehen ist.

9. Kamerastabilisierungsvorrichtung nach einem der vorangehenden Ansprüche, **dadurch gekennzeichnet, dass** die Kamerahalterungsvorrichtung (4) derart an dem Pendelarm (2) befestigt ist, dass sich ihr Schwerpunkt auf einer durch den Schwerpunkt (16) des Pendelarms (2) verlaufenden Längsachse (12) des Pendelarms (2) befindet.

10. Kamerastabilisierungsvorrichtung nach Anspruch 9, **dadurch gekennzeichnet, dass** zur Nachjustierung des Schwerpunkts der Kamerahalterungsvorrichtung (4) bezüglich der Längsachse (12) wenigstens ein in einer nicht zur Richtung der Längsachse (12) parallelen Richtung verschiebbares Massenelement (14) an der Kamerahalterungsvorrichtung (4) vorgesehen ist.

11. Kamerastabilisierungsvorrichtung nach Anspruch 10, **dadurch gekennzeichnet, dass** wenigstens eines der Massenelemente (14) die Steuereinrichtung (25) und/oder einen Teil der Steuereinrichtung (25) umfasst.

12. Kamerastabilisierungsvorrichtung nach einem der vorangehenden Ansprüche, **dadurch gekennzeichnet, dass** das erste Ringelement (6) um eine bei nicht durch Drehung um die Tiltachse (19) geneigter Kamera (9) zur Rollachse (20) parallele Schwenkachse (37) schwenkbar in dem Halterahmen (5) gelagert ist.

13. Kamerastabilisierungsvorrichtung nach Anspruch 12, **dadurch gekennzeichnet, dass** die an dem ersten Ringelement (6) befestigten Antriebsmittel (18) für die Drehung um die Tiltachse (19) in einem kreissegmentartigen Führungsabschnitt (36) des Halterahmens (5) geführt sind, insbesondere an zwei gegenüberliegenden Seiten des Halterahmens (5).

14. Kamerastabilisierungsvorrichtung nach Anspruch 12 oder 13, **dadurch gekennzeichnet, dass** Antriebsmittel (38) zur Schwenkung um die Schwenkachse (37) vorgesehen sind und die Steuereinrichtung (25) zur Ansteuerung der Antriebsmittel (38) derart, dass eine vorbestimmte horizontale Ausrichtung des ersten Ringelements (6) beibehalten wird, ausgebildet ist.

## Claims

1. A camera stabilization apparatus (1) having an elongate pendulum arm (2) which can be gimballed via a coupling apparatus (3) and which has a camera holder apparatus (4) at a first side of the coupling apparatus (3), wherein the camera holder apparatus (4) comprises:
- a first ring element (6);
- a second ring element (7) supported rotatably about a roll axis (20), in particular concentrically to the first ring element (6), within the first ring element (6);
- a camera fastening apparatus (8) fastened to the second ring element (7); and
- a stabilization arrangement (26) comprising at least one motion sensor (24) for detecting movements affecting a camera (9) fastened to the camera fastening apparatus (8), drive means (18, 21) which can be controlled to rotate the second ring element (7) about the roll axis (20), and a control device (24) which is configured to compensate movements of the camera detected by means of the at least one motion sensor (24) from a desired alignment by controlling the drive means (18, 21),
**characterized in that**
the camera holder apparatus (4) further comprises an outer holding frame (5) which is fastened to the pendulum arm (2), with the first ring element (6) being supported in the holding frame (5) and being rotatable about a tilt axis (19), with the roll axis (20) of the second ring element (7) being perpendicular to the tilt axis (19), and with the drive means (18, 21) further being able to be controlled to rotate the first ring element (6) about the tilt axis (19).

2. A camera stabilization apparatus in accordance with claim 1, **characterized in that** motion sensors (24) associated with the respective individual ring elements (6, 7) and/or motion sensors (24) associated with the holding frame (5) are provided.

3. A camera stabilization apparatus in accordance with claim 1 or claim 2, **characterized in that** the camera fastening apparatus (8) has an adjustment device (23) in three mutually perpendicular spatial directions such that the center of gravity (11) of the ring arrangement, comprising the first ring element (6) and the second ring element (7) as well as an installed camera (9), can be positioned on the roll axis (20) and the tilt axis (19) and/or an overall center of gravity (16) of the camera stabilization apparatus (1) can be adjusted.

4. A camera stabilization apparatus in accordance with any one of the preceding claims, **characterized in that** an operating device (29) is provided which has an operating element (30) for setting a camera alignment in the tilt axis (19) and the roll axis (20), with the drive means (18, 21) being able to be controlled, in particular by the control device (25), in dependence on an operation of the operating element (31) to set a selected alignment as a desired alignment, and/or in that the camera stabilization device (1) has, in particular at the side of the stabilization arrangement (26), an interface (27, 29) for receiving a desired alignment, with the drive means (18, 21) being able to be controlled, in particular by the control device (25), to set the desired alignment.

5. A camera stabilization apparatus in accordance with any one of the preceding claims, **characterized in that** the pendulum arm (2) has, at a second side disposed opposite the first side with respect to the coupling apparatus (3), at least one counterweight (10), in particular an adaptable counterweight (10), for balancing the camera stabilization apparatus (1) with respect to the coupling apparatus (3) and/or the coupling apparatus (3) can be displaced along the pendulum arm (2) by means of a displacement means.

6. A camera stabilization apparatus in accordance with claim 5, **characterized in that**, at the tilt axis (19) or at a secondary axis in parallel therewith at the side of the holding frame (5), at least one pendulum body (32), which is freely rotatably supported at least at times and which is asymmetrical with respect to the support, is provided for shifting the center of gravity of the camera stabilization apparatus (1), with the center of gravity (16) being disposed more towards the counterweight (10) when the camera (9) is arranged higher.

7. A camera stabilization apparatus in accordance with claim 6, **characterized in that**, when the first ring element (6) is symmetrically supported at both sides at the holding frame (5), a respective at least one pendulum body (32) is provided at both sides.

8. A camera stabilization apparatus in accordance with claim 6 or claim 7, **characterized in that** a fixing means (34), which in particular acts magnetically and which can be controlled by the control device (25), is provided for the pendulum bodies (32).

9. A camera stabilization apparatus in accordance with any one of the preceding claims, **characterized in that** the camera holder apparatus (4) is fastened to the pendulum arm (2) such that its center of gravity is located on a longitudinal axis (12) of the pendulum arm (2) extending through the center of gravity (16) of the pendulum arm (2).

10. A camera stabilization apparatus in accordance with claim 9, **characterized in that**, to readjust the center of gravity of the camera holder apparatus (4) with respect to the longitudinal axis (12), at least one mass element (14) displaceable in a direction not in parallel with the direction of the longitudinal axis (12) is provided at the camera holder apparatus (4).

11. A camera stabilization apparatus in accordance with claim 10, **characterized in that** at least one of the mass elements (14) comprises the control device (25) and/or a part of the control device (25).

12. A camera stabilization apparatus in accordance with any one of the preceding claims, **characterized in that** the first ring element (6) is pivotably supported in the holding frame (5) about a pivot axis (37) which is in parallel with the roll axis (20) when the camera (9) is not inclined by a rotation about the tilt axis (19).

13. A camera stabilization apparatus in accordance with claim 12, **characterized in that**, for the rotation about the tilt axis (19), the drive means (18) fastened to the first ring element (6) are guided in a guide section (36) of the holding frame (5) having the shape of a segment of a circle, in particular at two oppositely disposed sides of the holding frame (5).

14. A camera stabilization apparatus in accordance with claim 12 or claim 13, **characterized in that** drive means (38) are provided for pivoting about the pivot axis (37) and the control device (25) is configured to control the drive means (38) such that a predetermined horizontal orientation of the first ring element (6) is maintained.

## Revendications

1. Dispositif de stabilisation de caméra (1) comprenant un bras pendulaire (2) allongé qui peut être suspendu à la Cardan par l'intermédiaire d'un dispositif d'accouplement (3) et qui comporte un dispositif de support de caméra (4) sur un premier côté du dispositif d'accouplement (3), le dispositif de support de caméra (4) comprenant :
- un premier élément annulaire (6),
- un deuxième élément annulaire (7) monté à l'intérieur du premier élément annulaire (6) de manière à pouvoir tourner autour d'un axe de roulis (20), en particulier de manière concentrique par rapport au premier élément annulaire (6),
- un dispositif de fixation de caméra (8) fixé au deuxième élément annulaire (7), et
- un ensemble de stabilisation (26) comportant au moins un capteur de mouvement (24) pour détecter des mouvements se répercutant sur une caméra (9) fixée au dispositif de fixation de caméra (8), des moyens d'entraînement (18, 21) pilotables pour faire tourner le deuxième élément annulaire (7) autour de l'axe de roulis (20), et un dispositif de commande (24) réalisé pour compenser les mouvements de la caméra hors d'une orientation de consigne détectés au moyen dudit au moins un capteur de mouvement (24) par pilotage des moyens d'entraînement (18, 21),
**caractérisé en ce que**
le dispositif de support de caméra (4) comprend en outre un cadre de maintien extérieur (5) fixé au bras pendulaire (2), le premier élément annulaire (6) étant monté dans le cadre de maintien (5) et étant mobile en rotation autour d'un axe d'inclinaison (19), l'axe de roulis (20) du deuxième élément annulaire (7) étant perpendiculaire à l'axe d'inclinaison (19), et les moyens d'entraînement (18, 21) pouvant être pivotés en outre pour faire tourner le premier élément annulaire (6) autour de l'axe d'inclinaison (19).

2. Dispositif de stabilisation de caméra selon la revendication 1,
**caractérisé en ce qu'**il est prévu des capteurs de mouvement (24) associés respectivement aux éléments annulaires (6, 7) individuels et/ou des capteurs de mouvement (24) associés au cadre de maintien (5).

3. Dispositif de stabilisation de caméra selon la revendication 1 ou 2, **caractérisé en ce que** le dispositif de fixation de caméra (8) comprend un dispositif (23) de réglage dans trois directions spatiales perpendiculaires entre elles, de telle sorte que le centre de gravité (11) de l'ensemble annulaire, comprenant le premier élément annulaire (6) et le deuxième élément annulaire (7) ainsi qu'une caméra montée (9), peut être positionné sur l'axe de roulis (20) et sur l'axe d'inclinaison (19), et/ou qu'un centre de gravité global (16) du dispositif de stabilisation de caméra (1) peut être ajusté.

4. Dispositif de stabilisation de caméra selon l'une des revendications précédentes,
**caractérisé en ce qu'**il est prévu un dispositif de manipulation (29) qui comprend un élément de manipulation (30) pour régler une orientation de la caméra dans l'axe d'inclinaison (19) et dans l'axe de roulis (20), les moyens d'entraînement (18, 21) pouvant être pilotés, en particulier par le dispositif de commande (25), en fonction d'une manipulation de l'élément de manipulation (31) pour régler une orientation sélectionnée à titre d'orientation de consigne, et/ou **en ce que**
le dispositif de stabilisation de caméra (1) comprend, en particulier du côté de l'ensemble de stabilisation (26), une interface (27, 29) pour recevoir une orientation de consigne, les moyens d'entraînement (18, 21) pouvant être pilotés, en particulier par le dispositif de commande (25), pour régler l'orientation de consigne.

5. Dispositif de stabilisation de caméra selon l'une des revendications précédentes,
**caractérisé en ce que** le bras pendulaire (2) comporte, sur un deuxième côté opposé au premier côté par rapport au dispositif d'accouplement (3), au moins un contrepoids (10), en particulier adaptable, pour équilibrer le dispositif de stabilisation de caméra (1) par rapport au dispositif d'accouplement (3), et/ou le dispositif d'accouplement (3) peut être déplacé en translation le long du bras pendulaire (2) par un moyen de translation.

6. Dispositif de stabilisation de caméra selon la revendication 5,
**caractérisé en ce que** sur l'axe d'inclinaison (19) ou sur un axe secondaire parallèle à celui-ci, du côté du cadre de maintien (5), il est prévu au moins un corps pendulaire (32) monté au moins temporairement de manière à pouvoir tourner librement et asymétrique par rapport au montage, pour déplacer le centre de gravité du dispositif de stabilisation de caméra (1), le centre de gravité (16) étant davantage situé vers le contrepoids (10) lorsque la caméra (9) est disposée plus haut.

7. Dispositif de stabilisation de caméra selon la revendication 6,
**caractérisé en ce que**, le premier élément annulaire (6) étant monté symétriquement de part et d'autre sur le cadre de maintien (5), il est prévu au moins un corps pendulaire (32) respectif de part et d'autre.

8. Dispositif de stabilisation de caméra selon la revendication 6 ou 7, **caractérisé en ce qu'**il est prévu un moyen d'arrêt (34) pour les corps pendulaires (32), qui agit en particulier par voie magnétique et qui peut être piloté par le dispositif de commande (25).

9. Dispositif de stabilisation de caméra selon l'une des revendications précédentes,
**caractérisé en ce que** le dispositif de support de caméra (4) est fixé au bras pendulaire (2) de telle sorte que son centre de gravité se trouve sur un axe longitudinal (12) du bras pendulaire (2) passant par le centre de gravité (16) du bras pendulaire (2).

10. Dispositif de stabilisation de caméra selon la revendication 9,
**caractérisé en ce que** pour réajuster le centre de gravité du dispositif de support de caméra (4) par rapport à l'axe longitudinal (12), il est prévu au moins un élément de masse (14), mobile en translation dans une direction non parallèle à la direction de l'axe longitudinal (12), sur le dispositif de support de caméra (4).

11. Dispositif de stabilisation de caméra selon la revendication 10, **caractérisé en ce que** l'un au moins des éléments de masse (14) comprend le dispositif de commande (25) et/ou une partie du dispositif de commande (25).

12. Dispositif de stabilisation de caméra selon l'une des revendications précédentes,
**caractérisé en ce que** le premier élément annulaire (6) est monté dans le cadre de maintien (5) de manière à pouvoir pivoter autour d'un axe de pivotement (37) parallèle à l'axe de roulis (20) lorsque la caméra (9) n'est pas inclinée par rotation autour de l'axe d'inclinaison (19).

13. Dispositif de stabilisation de caméra selon la revendication 12, **caractérisé en ce que** les moyens d'entraînement (18), fixés au premier élément annulaire (6), pour la rotation autour de l'axe d'inclinaison (19) sont guidés dans une portion de guidage (36) en forme de segment de cercle du cadre de maintien (5), en particulier sur deux côtés opposés du cadre de maintien (5).

14. Dispositif de stabilisation de caméra selon la revendication 12 ou 13, **caractérisé en ce qu'**il est prévu des moyens d'entraînement (38) pour le pivotement autour de l'axe de pivotement (37), et le dispositif de commande (25) pour piloter les moyens d'entraînement (38) est réalisé de telle sorte qu'une orientation horizontale prédéterminée du premier élément annulaire (6) soit maintenue.
